# FASCICULE DE BREVET EUROPEEN

(11) **EP 1 135 622 B1**
(45) Date de publication et mention de la délivrance du brevet: **17.03.2004**
(21) Numéro de dépôt: 00966227.1
(22) Date de dépôt: 29.09.2000
(51) Int. Cl.: F16C 3/06

(54) **VILEBREQUIN DE MOTEUR A COMBUSTION INTERNE MULTICYLINDRE**
KURBELWELLE FÜR EINEN MEHRZYLINDRIGEN VERBRENNUNGSMOTOR
MULTICYLINDER INTERNAL COMBUSTION ENGINE CRANKSHAFT

(30) Priorité: 01.10.1999 FR 9912275
(43) Date de publication de la demande: 26.09.2001
(73) Titulaire: Renault s.a.s., 92100 Boulogne Billancourt (FR)
(72) Inventeur: OLLIVIER, Gérard, F-78340 Les Clayes/Bois (FR)
(74) Mandataire: Srour, Elie
(86) Numéro de dépôt international: PCT/FR2000/002696
(87) Numéro de publication internationale: WO 2001/025646

(56) Documents cités:
- EP-A- 0 199 907
- EP-A- 0 243 896
- DE-C- 714 558
- FR-A- 1 257 444

## Description

La présente invention concerne les vilebrequins des moteurs à combustion interne multicylindres destinés notamment à équiper les véhicules automobiles conformement à la préambule de la revendication 1 (EP 0 199 907 A). L'invention concerne plus particulièrement l'amélioration de la résistance mécanique des vilebrequins grâce à une forme adaptée de leurs bras.

Le vilebrequin ou arbre moteur d'un moteur à combustion multicylindre reçoit la poussée des pistons par l'intermédiaire des bielles et fournit un mouvement rotatif à partir des mouvements rectilignes alternatifs des pistons.

Classiquement, le vilebrequin d'un moteur à combustion interne présente des portées d'axe ou tourillons placés en ligne destinées à venir tourner dans des paliers correspondants portés par le bloc-cylindres. Les manetons formant les axes des têtes de bielles sont solidaires des tourillons par des paires de bras s'étendant sensiblement perpendiculairement à l'axe longitudinal du vilebrequin.

Le vilebrequin est également pourvu de contrepoids servant à l'équilibrage statique et dynamique des équipages mobiles formés par les différents ensembles maneton-bielle-piston. Chaque contrepoids est porté par au moins l'un des bras supportant le maneton correspondant, à l'opposé de ce dernier par rapport au tourillon.

Les bras reliant les tourillons aux manetons doivent présentés des raideurs importantes pour limiter la déformation du vilebrequin en fonctionnement lorsque ce dernier est soumis à la pression des gaz et à la force centrifuge des bielles et des pistons. Faute de posséder une raideur suffisante, les bras tendent à fléchir d'où une augmentation des frottements au niveau des paliers entraînant une baisse des prestations du moteur notamment en terme d'usure, de consommation et de bruyance.

Classiquement, les profils des faces externes des bras au droit axial des manetons se présentent sous des formes géométriques simples : deux surface planes en dépouille ou deux formes cylindriques convexes ou concaves en dépouille, avec parfois des nervures au plan de joint. Ces solutions traditionnelles ne représentent pas toujours la meilleur prestation raideur/poids, avec pour inconvénient d'impliquer une masse supplémentaire au fonctionnement, donc un coût supérieur.

Le document EP 199907 A enseigne un vilebrequin un épaulement sur la surface extérieure des bras reliant les manetons aux tourillons. Cette épaulement à une profile trapézoïdal et positionnée entre l'axe du maneton et l'axe du tourillons.

La présente invention a donc pour objet un vilebrequin de moteur à combustion interne remédiant aux inconvénients de l'art antérieur précité en ce qu'il garantit une grande raideur des bras de liaison pour un poids réduit.

Le vilebrequin selon l'invention est plus particulièrement destiné à équiper un moteur à combustion interne, il est constitué par un arbre présentant des tourillons, des manetons réunis aux tourillons par des bras.

Au moins l'un des bras présente un bossage de rigidification, ce bossage s'étendant au droit du maneton correspondant en saillie sur la face externe du bras et le bossage est formé par une calotte sphérique.

Selon une autre caractéristique du vilebrequin objet de l'invention, le diamètre de base de ladite calotte sphérique correspond sensiblement au deux tiers du diamètre du maneton correspondant.

Selon une autre caractéristique du vilebrequin objet de l'invention, la calotte sphérique est implantée à l'extrémité du bras de sorte que son cercle de base tangente la génératrice du maneton.

Selon une autre caractéristique du vilebrequin objet de l'invention, le bossage se prolonge le long du bras en direction du tourillon par une nervure.

Selon une autre caractéristique du vilebrequin objet de l'invention, la nervure présente une largeur comprise entre 0,3 et 0,5 fois le diamètre de base du bossage.

On comprendra mieux les buts, aspects et avantages de la présente invention, d'après la description présentée ci-après de différents modes de réalisation de l'invention, donné à titre d'exemple non limitatif, en se référant aux dessins annexés, dans lesquels :
- la figure 1 est une vue de face partielle d'un vilebrequin selon l'invention ;
- la figure 2 est une vue en coupe selon la ligne II-II de la figure 1 ;
- la figure 3 est une vue similaire à la figure 2 présentant une variante de réalisation du vilebrequin selon l'invention.

Seuls les éléments nécessaires à la compréhension de l'invention ont été représentés. Pour faciliter la lecture des dessins, les mêmes éléments portent les mêmes références d'une figure à l'autre.

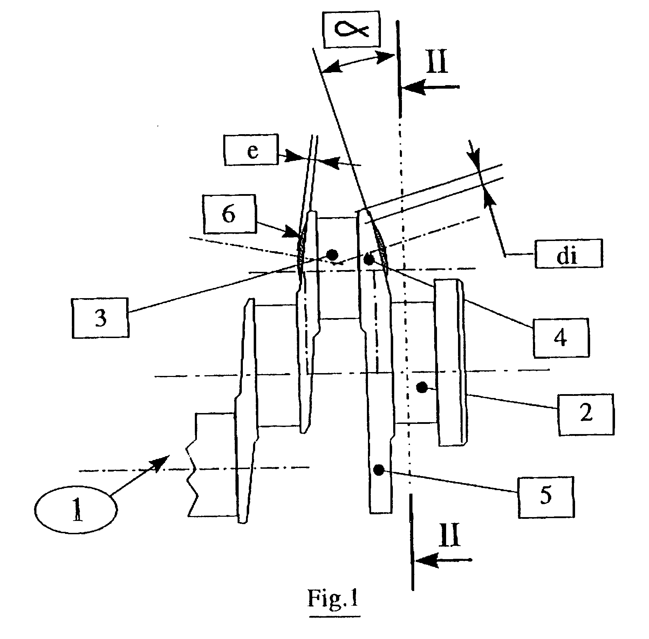

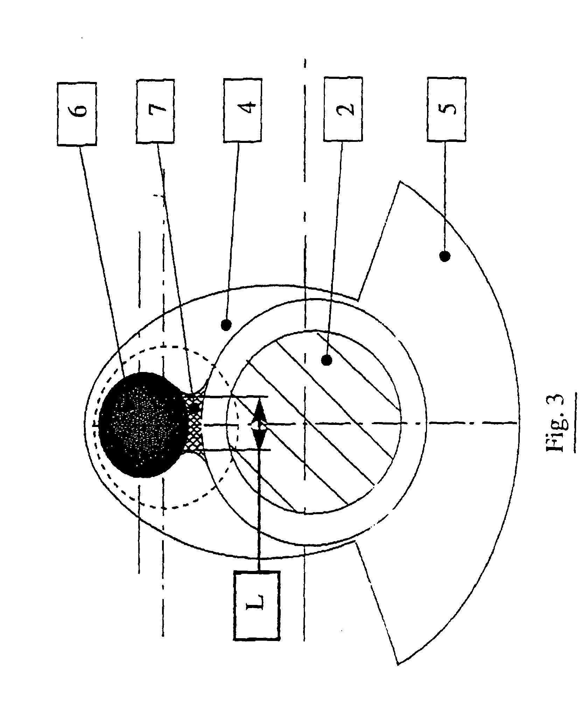

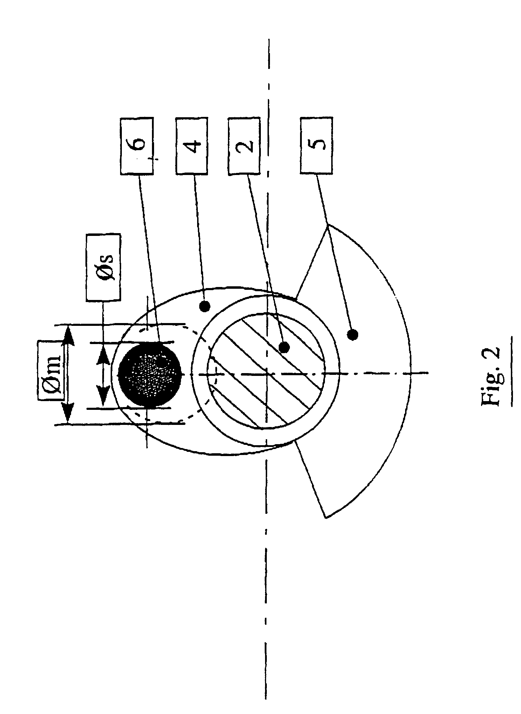

En se reportant aux figures 1 et 2, on a représenté un vilebrequin référencé 1, par exemple à cinq tourillons et quatre manetons destiné à équiper un moteur à combustion interne du type à quatre cylindres en ligne. Ce vilebrequin 1 est constitué par un arbre obtenu par fonderie ou par forgeage qui comprend des portées d'axe ou tourillons 2 placés en ligne et destinés à venir tourner dans des paliers correspondant du carter-cylindres non figuré du moteur.

Chacun des manetons 3 formant les axes des têtes de bielles sont solidaires des tourillons adjacents par des bras 4 s'étendant sensiblement perpendiculairement à l'axe longitudinal du vilebrequin. Par ailleurs, tout ou partie des bras 4 sont munis de contrepoids 5 servant à l'équilibrage statique et dynamique des équipages mobiles formés par les différents ensembles maneton-bielle-piston.

On a ainsi, en partant d'une extrémité de l'arbre, un tourillon extrême 2, puis un tourillon intermédiaire, puis un tourillon central, puis un tourillon intermédiaire et enfin un tourillon extrême. Entre ces 5 tourillons sont disposés 4 manetons, un maneton extrême 3 puis deux manetons intermédiaires à 180 degrés par rapport au maneton 3 et enfin le maneton extrême dans la même position que le maneton 3. Chaque maneton est réuni aux tourillons adjacents respectivement par une paire de bras s'étendant sensiblement perpendiculairement à l'axe longitudinal du vilebrequin 1.

L'équilibrage des équipages mobiles formés par les différents ensembles maneton-bielle-piston est opéré par les contrepoids 5 disposés respectivement sur toute ou partie des bras, ces contrepoids étant placés à l'opposé des manetons correspondants par rapport aux tourillons.

Conformément à l'invention, tous les bras 4 du vilebrequin sont conformés pour offrir une grande raideur sans accroissement de poids.

Pour ce faire chacun des bras 4, qui dans les exemples illustrés sont de forme générale trapézoïdale, présente un renfort de forme adaptée, répondant au plus juste besoin des forces locales. Ce renfort est défini par un bossage faisant corps avec le bras, bossage en forme de calotte sphérique 6.

Chacun des bras 4 est conformé pour présenté une face externe offrant des flancs sensiblement plans ou encore cylindrique concaves, inclinés par rapport au plan perpendiculaire à l'axe du vilebrequin avec un angle α compris de préférence entre 10° et 30°.

Le renfort de forme sphérique 6 est ménagé au milieu du bras 4, sensiblement centré par rapport au plan de symétrie de ce dernier. Ce renfort 6 qui fait corps avec le bras 4 et qui est obtenu de préférence de moulage, présente à la base un diamètre Φs sensiblement égal au deux tiers (2/3) du diamètre Φm du maneton 3 correspondant.

La calotte sphérique est implantée à l'extrémité supérieure du bras (opposée au tourillon) de préférence, le cercle de base de la calotte 6 est disposé de façon à tangenter la génératrice du maneton 3. L'épaisseur "e" de la calotte 6 en saillie à la surface du bras 4, est comprise de préférence entre 1 mm et 7 mm, de sorte que la distance entre la calotte 6 et le flanc du tourillon adjacent 2 reste supérieure à 0,2 mm. De préférence également, la calotte 6 rejoint le bras 4 en formant une gorge de dégagement dont le rayon de raccordement est d'environ 4 mm de rayon.

Selon la variante de réalisation représentée à la figure 3, la calotte sphérique est prolongée le long du bras 4 en direction du tourillon 2 par une nervure 7. Cette nervure 7 présente une largeur "L" comprise environ entre 0,3 à 0,5 Φs, le diamètre de la base de la calotte 6. Le profil de cette nervure est soit concave comme figuré, soit encore droit ou encore convexe.

Une telle nervure permet d'améliorer l'effet du renfort sphérique 6 pour abaisser le niveau de contrainte dans le bras.

Bien entendu, l'invention n'est nullement limitée au mode de réalisation décrit et illustré qui n'a été donné qu'à titre d'exemple.

Ainsi seule une partie des bras 4 du vilebrequin 1 peuvent être munis de bossages 6.

## Revendications

1. Vilebrequin pour un moteur à combustion interne multicylindres, constitué par un arbre (2) présentant des tourillons (2), des manetons (3) réunis auxdits tourillons par des bras (4), au moins l'un desdits bras (4) présentant un bossage (6) de rigidification qui s'étend au droit du maneton (3) correspondant en saillie sur la face externe dudit bras (4), **caractérisé en ce que** le bossage (6) est formé par une calotte sphérique.

2. Vilebrequin pour un moteur à combustion interne multicylindres selon la revendication 1, **caractérisé en ce que** le diamètre de base (Φs) de ladite calotte sphérique (6) correspond sensiblement au deux tiers du diamètre (Φm) du maneton correspondant (3).

3. Vilebrequin pour un moteur à combustion interne multicylindres selon l'une quelconque des revendications précédentes, **caractérisé en ce que** ladite calotte sphérique (6) est implantée à l'extrémité du bras (4) de sorte que son cercle de base tangente la génératrice du maneton (3).

4. Vilebrequin pour un moteur à combustion interne multicylindres selon l'une quelconque des revendications précédentes, **caractérisé en ce que** ladite calotte sphérique (6) se prolonge le long du bras (4) en direction du tourillon (2) par une nervure (7).

5. Vilebrequin pour un moteur à combustion interne multicylindres selon la revendication 4, **caractérisé en ce que** ladite nervure présente une largeur (L) comprise entre 0,3 et 0,5 fois le diamètre de base de ladite calotte sphérique (6).

## Patentansprüche

1. Kurbelwelle für einen mehrzylindrigen Verbrennungsmotor, welche durch eine Welle (2) gebildet ist, wobei sie Lagerzapfen (2), Kurbelzapfen (3), welche mit den Lagerzapfen über Arme (4) verbunden sind, aufweist, wobei mindestens einer der Arme (4) einen Versteifungsvorsprung (6) aufweist, der sich rechtwinklig von dem Kurbelzapfen (3) erstreckt, wobei er einem Vorsprung auf der äußeren Fläche des Arms (4) entspricht, **dadurch gekennzeichnet, dass** der Vorsprung (6) durch eine kugelförmige Kuppe gebildet ist.

2. Kurbelwelle für einen mehrzylindrigen Verbrennungsmotor gemäß Anspruch 1, **dadurch gekennzeichnet, dass** der Basisdurchmesser Φs der runden Kuppe (6) im Wesentlichen zwei Dritteln des Durchmessers Φm des entsprechenden Kurbelzapfens (3) entspricht.

3. Kurbelwelle für einen mehrzylindrigen Verbrennungsmotor gemäß irgendeinem der vorherigen Ansprüche, **dadurch gekennzeichnet, dass** die runde Kuppe (6) an dem Ende des Arms (4) in einer Art und Weise eingesetzt ist, dass ihr Grundkreis mit der Erzeugenden des Kurbelzapfens (3) in Tangente gelangt.

4. Kurbelwelle für einen mehrzylindrigen Verbrennungsmotor gemäß irgendeinem der vorherigen Ansprüche, **dadurch gekennzeichnet, dass** die runde Kuppe (6) entlang dem Arm (4) in Richtung des Lagerzapfens (2) durch eine Rippe (7) verlängert ist.

5. Kurbelwelle für einen mehrzylindrigen Verbrennungsmotor gemäß Anspruch 4, **dadurch gekennzeichnet, dass** die Rippe eine Länge L zwischen 0,3 und 0,5 mal dem Grunddurchmesser der runden Kuppe (6) aufweist.

## Claims

1. A crankshaft for a multicylinder internal combustion engine comprising a shaft (1) having journals (2), crank pins (3) connected to said journals by arms (4), at least one of said arms (4) having a stiffening boss (6) which extends in line with the corresponding crank pin (3) in projecting relationship on the external face of said arm (4), **characterised in that** the boss (6) is formed by a portion of a sphere.

2. A crankshaft for a multicylinder internal combustion engine according to claim 1 **characterised in that** the base diameter (Φs) of said portion of a sphere (6) corresponds substantially to two thirds of the diameter (Φm) of the corresponding crank pin (3).

3. A crankshaft for a multicylinder internal combustion engine according to either one of the preceding claims **characterised in that** said portion of a sphere (6) is disposed at the end of the arm (4) in such a way that its base circle is tangential to the generatrix of the crank pin (3).

4. A crankshaft for a multicylinder internal combustion engine according to any one of the preceding claims **characterised in that** said portion of a sphere (6) is prolonged along the arm (4) in the direction of the journal (2) by a rib (7).

5. A crankshaft for a multicylinder internal combustion engine according to claim 4 **characterised in that** said rib is of a width (L) of between 0.3 and 0.5 times the base diameter of said portion of a sphere (6).
